# EUROPÄISCHE PATENTSCHRIFT

(11) **EP 1 115 548 B1**
(45) Veröffentlichungstag und Bekanntmachung des Hinweises auf die Patenterteilung: **11.08.2004**
(21) Anmeldenummer: 99969369.0
(22) Anmeldetag: 15.09.1999
(51) Int. Cl.: B29C 47/00, B29C 47/02

(54) **VERFAHREN UND VORRICHTUNG ZUR HERSTELLUNG EINES FOLIENSCHLAUCHES AUF CELLULOSEBASIS, DEN EINE EINLAGE VERSTÄRKT**
METHOD AND DEVICE FOR PRODUCING A FILM TUBE BASED ON CELLULOSE, WHICH REINFORCES A LINING
PROCEDE ET DISPOSITIF DE PRODUCTION D'UNE PELLICULE TUBULAIRE A BASE DE CELLULOSE, QUI RENFORCE UNE GARNITURE INTERIEURE

(30) Priorität: 24.09.1998 DE 19843723
(43) Veröffentlichungstag der Anmeldung: 18.07.2001
(73) Patentinhaber: Kalle GmbH & Co. KG, 65203 Wiesbaden (DE)
(72) Erfinder: GORD, Herbert, D-55218 Ingelheim (DE); HAMMER, Klaus-Dieter, D-55120 Mainz (DE); SATTLER, Helmut, D-65201 Wiesbaden (DE); NEEFF, Rainer, D-65203 Wiesbaden (DE)
(74) Vertreter: Zounek, Nikolai, Dipl.-Ing.
(86) Internationale Anmeldenummer: PCT/EP1999/006820
(87) Internationale Veröffentlichungsnummer: WO 2000/016959

(56) Entgegenhaltungen:
- WO-A-95/07811
- DE-A- 1 952 464
- DE-A- 3 907 951
- GB-A- 1 042 182
- US-A- 3 645 760
- US-A- 4 164 536
- US-A- 4 401 136

## Beschreibung

Die Erfindung betrifft ein Verfahren zur Herstellung eines mit einer Einlage verstärkten Folienschlauches auf Cellulosebasis durch Extrudieren eines Cellulose-Lösung auf die Einlage, wobei die Einlage von einer Rolle abgezogen, mit Emulgatoren, Netz- und/-oder Verankerungsmitteln behandelt wird und zu einer schlauchförmigen Hülle mit überlappender Längsnaht geformt wird, die vor einem Düsenblock verklebt wird, durch den die Hülle hindurchgeführt und in welchem die Cellulose-Lösung auf die Hülle aufgebracht wird und diese durchdringt, um einen einlagenverstärkten Folienschlauch zu erhalten.

Ein derartiges Verfahren ist aus dem Dokument GB-A-1042182 bekannt. Bei diesem Verfahren werden eine oder zwei Viskose-Lösungen auf die Einlage extrudiert. Der Folienschlauch wird weder mit Emulgatoren, Netz- und/oder Verankerungsmitteln behandelt. Werden zwei unterschiedliche Viskoselösungen auf die Einlage aufgebracht, so durchdringt die eine Viskoselösung den Folienschlauch und schlägt sich auf seiner Innenseite nieder, während die andere Viskoselösung die Außenseite der Einlage bzw. des Folienschlauches beschichtet.

Cellulose ist in den üblichen Lösemitteln nicht löslich und hat weder einen Schmelzpunkt oder einen Schmelzbereich und kann daher auch nicht thermoplastisch verarbeitet werden. Aus diesem Grund wird Cellulose normalerweise zur Herstellung von Schlauchhüllen für Nahrungsmittel, wie beispielsweise Wursthüllen, chemisch umgewandelt, wobei diese Verfahren mit einem Abbau der Cellulose verbunden sind, d.h. der durchschnittliche Polymerisationsgrad der Cellulose wird geringer. Derartige Verfahren sind technisch sehr aufwendig und entsprechend teuer im Betrieb.

Zur Zeit wird das Viskose-Verfahren beim Extrudieren von Folienschläuchen auf Cellulosebasis bevorzugt. Dabei wird die Cellulose mit Natronlauge und anschließend mit Schwefelkohlenstoff umgesetzt. Auf diese Weise wird eine Cellulosexanthogenat-Lösung erhalten, die durch eine Spinn-oder Ringdüse in ein sogenanntes Spinn- oder Fällbad extrudiert wird. Mit Hilfe von weiteren Fäll- und Waschbädern wird die Cellulose regeneriert.

Es ist seit langem bekannt, daß Cellulose in Oxiden tertiärer Amine löslich ist, und das zur Zeit am besten geeignete Lösemittel für Cellulose ist N-methyl-morpholin N-oxid (NMMO). Die Cellulose löst sich darin, ohne sich dabei chemisch zu verändern. Es findet kein Abbau von Celluloseketten statt. Die Herstellung geeigneter Spinnlösungen ist bekannt (DD 218 104; DD 298 789; US-A 4 145 532; US-A 4 196 282; US-A 4 255 300). Aus den Lösungen lassen sich durch Extrudieren in ein Spinnbad Fäden herstellen (DE-A 44 09 609; US-A 5 417 909). In der WO 95/07811 (= CA 2 149 218) ist auch ein Verfahren zur Herstellung von Cellulose-Schlauchfolien nach dem Aminoxidverfahren offenbart. Kennzeichnend an diesem Verfahren ist die Kühlung der extrudierten Folie mit Kühlgas unmittelbar unterhalb des Ringspalts der Extrusionsdüse. Gemäß der EP-A 662 283 wird die extrudierte Schlauchfolie von innen mit Hilfe von Flüssigkeit gekühlt.

Rückgewinnung und Reinigung des NMMO's sind in der DD 274 435 beschrieben. Da die Cellulose in dem Verfahren chemisch nicht umgewandelt wird, ist der apparative Aufwand geringer. Bei dem Aminoxidverfahren fallen keine gasförmigen oder wäßrigen Abfallprodukte an, so daß es keine Probleme bei der Abluft oder dem Abwasser gibt. Es erlangt daher eine zunehmende Bedeutung.

In der EP-A 0 686 712 wird die Herstellung von flexiblen Cellulosefasern nach dem N-methyl-morpholin N-oxid(NMMO)-Spinnverfahren beschrieben. Darin wird eine Celluloselösung in wasserhaltigem NMMO durch eine Spinndüse ausgepreßt, über eine Luftstrecke in ein NMMO-haltiges, wäßriges Fällbad geführt und anschließend gewaschen, nachbehandelt und getrocknet.

Gemäß dem Dokument WO 93/13670 wird eine nahtlose, schlauchförmige Nahrungsmittelhülle durch Extrudieren einer Lösung von Cellulose in NMMO/Wasser mit Hilfe einer speziellen Extrusionsdüse hergestellt. Hierzu wird die Cellulose-NMMO-Lösung auf einem Papierband extrudiert. Die Fasereinlage, aus der ein Schlauch geformt ist, wird jedoch nicht mit einer NMMO-Lösung behandelt, sondern mit einer Viskose-Lösung aus regenerierter Cellulose, die in das Papierband eindringt. Zwischen einer Extrusionsdüse und einem Fällbad befindet sich eine Luftstrecke. Kennzeichnend für dieses Verfahren ist ein speziell geformter Hohldorn durch den hindurch die Fällflüssigkeit im Inneren des Schlauches zirkulieren kann. In der Luftstrecke wird das Innere des extrudierten Schlauches praktisch vollständig von Hohldorn und Fällflüssigkeit ausgefüllt. Eine Erwärmung der Einlage vor dem Aufbringen der Viskose-Lösung findet nicht statt.

In der WO 95/35340 ist ein Verfahren zur Herstellung von Celluloseblasfolien beschrieben, in dem eine in NMMO gelöste, nicht derivatisierte Cellulose verwendet wird.

Das Dokument GB-A 1 042 182 beschreibt ein Verfahren zur Herstellung eines mit einer Einlage verstärkten Folienschlauches auf Cellulosebasis durch Extrudieren einer Cellulose-NMMO-Lösung auf die Einlage, wobei die Einlage von einer Rolle abgezogen wird. Die Einlage wird zu einem Schlauch mit überlappender Längsnaht geformt, wobei die Längsnaht nicht verklebt wird. Dieser Schlauch wir von innen und von außen mit einer Viskoselösung behandelt.

Die DE-A 1 952 464 beschreibt eine Vorrichtung gemäß dem Oberbegriff des Anspruchs 16 zum Beschichten und Tränken eines Papierschlauches mit Polyvinylalkoholharz. Eine Beschichtung des Papierschlauches mit einer NMMO-Lösung findet ebenso wenig wie eine Tränkung eines derartigen Papierschlauches statt. Eine Klebevorrichtung zum Verkleben der überlappenden Längsnaht des Papierschlauches ist nicht vorhanden. Ebensowenig eine Wärmevorrichtung zum Vorwärmen des Papierschlauches und ein Spinnbad, dass ein Polyvinylalkoholharz enthält. Das Bad, durch das der Papierschlauch geführt wird, ist mit einer Netzmittellösung gefüllt.

In dem Dokument WO-A 95/07811 ist eine Vorrichtung zur Herstellung von Schläuchen durch Extrusion von Cellulose-NMMO-Lösung beschrieben. Die Schläuche sind reine Cellulosedärme, nicht jedoch sogenannte Faserdärme, bei denen eine Fasereinlage den Schlauch verstärkt. Die Vorrichtung zur Herstellung des Schlauches ist so ausgelegt, dass der Schlauch außen und innen mittels Luft gekühlt werden kann, wodurch die NMMO-Lösung rasch verfestigt wird. Bei der Kühlluft handelt es sich keineswegs um Stützluft, die in das Innere des Folienschlauchs eingeleitet wird.

Im Stand der Technik sind Verfahren und Vorrichtungen zur Erzeugung eines faserverstärkten Celluloseschlauches nach dem Viskoseverfahren bekannt, jedoch sind diese Verfahren und Vorrichtungen in der NMMO-Technologie aus folgenden Gründen nicht anwendbar:
- Unterschiedliche Temperaturen der Spinnlösungen
- Unterschiedliche Viskositäten der Spinnlösungen
- Verschiedene Lösungsmittel
- Unterschiedliche Empfindlichkeiten gegen Verdunstung und Verdünnung, Temperaturschwankungen, unterschiedliche Grenztemperaturen.

Üblicherweise wird die Cellulose beim Viskoseverfahren im Temperaturbereich von 20 bis 45 °C versponnen. Dagegen liegt die Extrusionstemperatur von Cellulose-NMMO-Lösungen bei 85 bis 115 °C.

Die Viskosität von Cellulose beim Viskoseverfahren beträgt etwa 10 bis 30 Pas, die von NMMO-Lösungen 10 bis 300 Pas, insbesondere 20 bis 200 Pas. Die Cellulose wird beim Viskoseverfahren mit Natronlauge und anschließend mit Schwefelkohlenstoff umgesetzt, während die NMMO-Lösungen organische Lösungen sind.

Es ist daher Aufgabe der Erfindung ein Verfahren und eine Vorrichtung so zu gestalten, daß sie zum Beschichten von zu einem Schlauch geformten Einlagen mit Cellulose-NMMO-Lösungen geeignet sind und ein gleichmäßiges Durchdringen der Einlagen mit Cellulose-NMMO-Lösungen ermöglichen.

Diese Aufgabe wird durch das Verfahren gemäß dem Anspruch 1 gelöst, wobei die Cellulose-Lösung eine wäßrige Cellulose-N-methyl-morpholin-N-oxid-Lösung ist und die schlauchförmige Hülle eine vor dem Düsenblock befindliche Heizstrecke durchläuft, in der sie mittels Heizluft auf die Temperatur der extrudierten Cellulose-M-methyl-morpholin-N-oxid-Lösung vorgewärmt wird, wobei das Innere des Folienschlauches mit einer Lösung gefüllt wird und der Folienschlauch aus dem Düsenblock aus- und in ein Spinnbad eintritt, in diesem umgelenkt und herausgeführt wird.

In Ausgestaltung des Verfahrens wird in das Innere des Folienschlauches nach dem Verlassen des Düsenblocks druckgeregelte Stützluft eingeblasen. Der Folienschlauch wird zweckmäßiger Weise über eine beheizte Kaliberringscheibe geführt, die von einem Heizmedium in geregelten Kreislauf durchströmt wird.

In Ausgestaltung des Verfahrens wird wäßrige NMMO-Lösung durch den Düsenblock hindurch in das Innere des Folienschlauches eingefüllt und auch abgesaugt, wobei der Zulauf und die Absaugung voneinander räumlich getrennt vorgenommen werden. Dabei wird der Zulauf der wäßrige NMMO-Lösung im Folienschlauch höhenverstellbar geregelt und erfolgt die Absaugung in der Weise, daß der Pegel im Folienschlauch bis zu 20 mm höher und bis zu 45 mm niedriger gegenüber dem Pegel im Spinnbad variierbar ist.

Die weitere Ausgestaltung des Verfahrens ergibt sich aus den Merkmalen der Patentansprüche 6 bis 15.

In Abwandlung dieses Verfahrens ist es auch möglich, anstelle eine mit Spinnbad gefüllte Kufe zu durchlaufen, das Spinnbad direkt innen und außen auf den Folienschlauch, beispielsweise über Ringdüsen aufzubringen, wie dies in der EP-A 0 006 601 beschrieben ist. Der Spinnbadspiegel ist dann innen und außen bis zur Oberkante der Spinnkufenumlenkwalze abgesenkt.

In Anspruch 16 wird eine Vorrichtung zur Durchführung des Verfahrens gemäß Anspruch 1 definiert.

Die Vorrichtung zur Herstellung eines mit einer Einlage verstärkten Folienschlauches, mit einer Vorratsrolle für die Einlage, einer Formstrecke, in der die Einlage zu einer schlauchförmigen Hülle mit überlappender Längsnaht geformt wird, einem Düsenblock mit einer Ringdüse, aus deren Düsenspalt die Lösung auf die schlauchförmige Hülle zur Ausformung des Folienschlauches extrudierbar ist, mit einer temperierbaren Luftstrecke zwischen dem Austritt aus dem Düsenblock und einem Spinnbad in einer Spinnkufe und einem Zulauf- und einen Absaugrohr im Inneren des Folienschlauches, zeichnet sich dadurch aus, daß eine Umlenkrolle mit einer Einrichtung zum Auftragen von Additiven und eine dem Düsenblock vorgeschaltete Klebeeinrichtung zum Verkleben der Längsnaht der schlauchförmigen Hülle vorhanden sind, daß eine Vorwärmeeinrichtung für die schlauchförmige Hülle vor dem Düsenblock angeordnet ist, daß die Vorwärmeeinrichtung über Heißluftleitungen und eine Abluftleitung mit einer heizbaren Heizung verbunden ist, aus der im Kreislauf erwärmte Luft in die Vorwärmeeinrichtung Strömen kann und aus welcher abgekühlte Luft in die Heizung Zurückströmen kann, und daß eine Umlenkwalze für den Folienschlauch nahe dem Boden des Spinnkufe angeordnet ist.

In Weiterbildung der Vorrichtung ist zwischen der Vorratsrolle und der Umlenkrolle eine Auftragseinrichtung angebracht, mit der Additive wie Emulgatoren, Netz- und/oder Verankerungsmittel auf die Einlage aufbringbar sind.

In weiterer Ausgestaltung der Vorrichtung enthält der Düsenblock die Ringdüse, die einen Doppelmantel auf weist, der mit einem Heizkreislauf verbunden ist und sind das Zulauf- und das Absaugrohr für die wäßrige N-methyl-morpholin-N-oxid-Lösung und eine Leitung für Stützluft des Folienschlauches zentral durch eine Kaliberringscheibe hindurchgeführt, die konzentrisch zu der Ringdüse im Folienschlauchinneren angeordnet ist und mit dieser einen Ringspalt für den Folienschlauch bildet.

Die Weiterbildung der Vorrichtung ergibt sich aus den Merkmalen der Patenansprüche 19 bis 24.

Mit dem erfindungsgemäßen Verfahren wird eine weitgehend gleichmäßige Durchdringung der Einlage mit Cellulose-NMMO-Lösung erreicht, so daß nach dem Durchlaufen weiterer Behandlungsstufen, wie Fäll-, Koagulationsbädern ein Verbund eines faserverstärkten Folienschlauches erhalten wird, der gegenüber den Ausgangsstoffen für seine Anwendung verbesserte Eigenschaften hat. Der faserverstärkte Folienschlauch auf Cellulose-NMMO-Basis entspricht in seinen Eigenschaften den bekannten Cellulosefaser- oder Faserdärmen, die aus Cellulosehydrat gefertigt und mit naßverfestigten Fasern aus Cellulose (= Cellulosefaservlies) verstärkt sind.

Im folgenden wird die Erfindung anhand der Zeichnungen näher erläutert:

Es zeigen:
- Fig. 1: eine schematische Schnittansicht der Vorrichtung nach der Erfindung mit hochgestelltem Zulaufrohr im Folienschlauch;
- Fig. 2: eine schematische Schnittansicht der Vorrichtung ähnlich derjenigen nach Fig. 1, mit in den Folienschlauch eingeschobenem Zulaufrohr,
- Fig. 3: eine vergrößerte Schnittansicht gemäß der Stelle A in Fig. 1 und
- Fig.en 4a + 4b: eine Seiten- und eine Draufsicht auf eine Klebeeinrichtung für eine schlauchförmige Hülle, geformt aus einer Einlage.

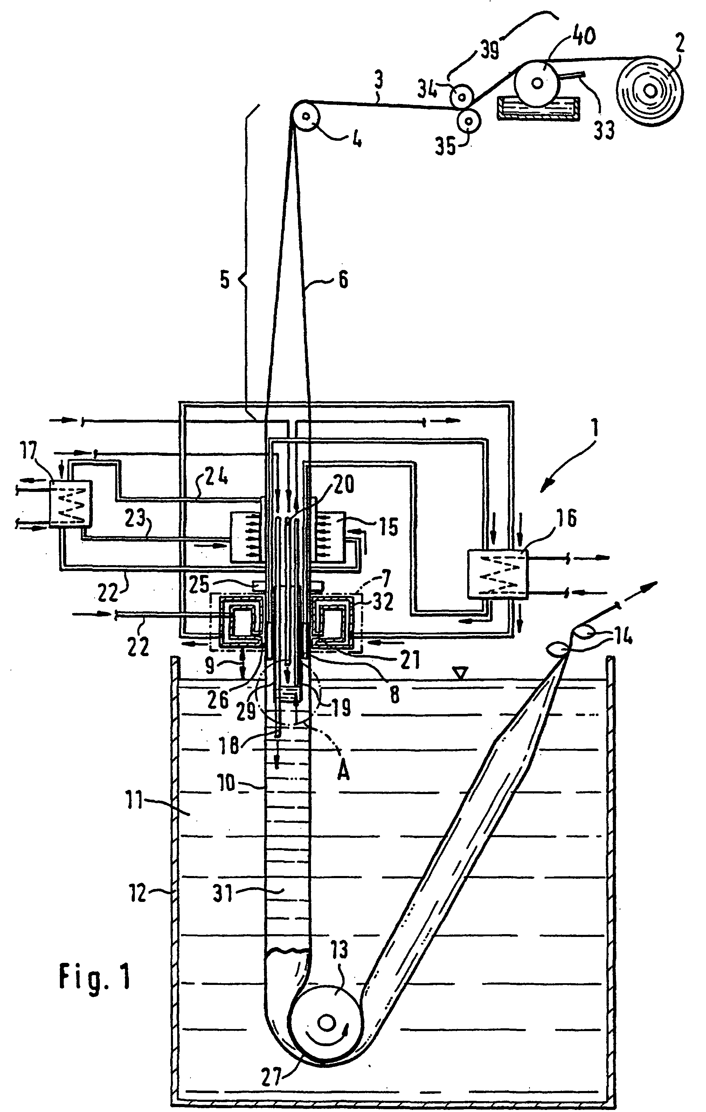

Eine in Fig. 1 gezeigte Vorrichtung 1 zum Extrudieren einer wäßrigen Cellulose-N-methyl-morpholin-N-oxid (NMMO)-Lösung auf eine Einlage umfaßt eine Vorratsrolle 2 für die Einlage 3, eine Umlenkrolle 4, eine Formstrecke 5, einen Düsenblock 7 mit einer Ringdüse und eine Spinnkufe 12, die mit einem Spinn- oder Fällbad 11 gefüllt ist.

Die Einlage 3, bei der es sich um Papier, Vlies, Faserpapier oder Faservlies handelt, wobei die Fasern bevorzugt lange Hanffasern sind, wird von der Vorratsrolle 2 abgezogen und über die Umlenkrolle 4 geführt. Das Faserpapier und das Faservlies werden. bei der Herstellung naß verfestigt, indem sie mit verdünnter Viskose, Celluloseacetatlösung oder Kunststofflotten imprägniertwerden. In diesen Ausführungsformen kommt die Einlage 3 bevorzugt zum Einsatz. Vor der Umlenkrolle 4 befindet sich eine Antragseinrichtung 39, die eine Rasterwalze 40, eine Rakel 33 und ein Abquetschwalzenpaar 34, 35 umfaßt, zum Auftragen von Additiven, wie Emulgatoren, Netz- und/oder Verankerungsmitteln, auf die Einlage 3. Nach dem Umlenken der Einlage 3 über die Umlenkrolle 4 erfolgt in der Formstrecke 5 durch eine nicht gezeigte Formschulter die Bildung eines Schlauches 6 mit überlappender Längsnaht 38 (siehe Fig. 4a).

Der Schlauch 6 bzw. der daraus entstehende Folienslauch 10 wird durch eine senkrecht absteigende Verspinnung gefertigt. Hierzu durchläuft der Schlauch 6 die Ringdüse 21 im Düsenblock 7, durch deren Düsenspalt die Cellulose-NMMO-Lösung auf die Hülle 6 zum Ausformen des Folienschlauches 10 extrudiert wird. Zuvor wird die Längsnaht der Hülle 6 vor dem Düsenblock 7 durch eine in den Fig.en 4a und 4b näher gezeigte Klebeeinrichtung 25 verklebt, wobei sich als Kleber reines NMMO oder Cellulose-NMMO-Lösungen bei Temperaturen zwischen 15 und 110 °C, insbesondere bei der Temperatur der aufzutragenden Cellulose-NMMO-Lösung eignen.

Die extrudierte Cellulose-NMMO-Lösung beschichtet und durchdringt die schlauchförmige Hülle gleichmäßig. Der für die Durchdringung erforderliche Druck wird durch die Geometrie eines Ringspaltes 26 im Düsenkörper 7 aufgebaut, dessen Spaltbereich 0,1 bis 5 mm, insbesondere 0,5 bis 1,5 mm beträgt. Der Ringspalt 26 wird durch eine Kaliberscheibe 8 und die Innenseite der Ringdüse 21 gebildet.

Nach dem Austritt aus dem Düsenkörper 7 durchläuft der Folienschlauch 10 eine Luftstrecke 9, bevor er in das Spinnbad 11 in der Spinnkufe 12 eintaucht. In der Luftstrecke 9 kann bei Bedarf eine Temperaturbehandlung mit temperierter Luft stattfinden, wobei erwärmte Luft den Verfestigungsvorgang der Cellulose-NMMO-Lösung verzögert und kühle Luft diesen Vorgang beschleunigt.

Anstelle des einseitigen Aufbringens der Cellulose-NMMO-Lösung auf die Außenseite der Hülle 6 kann die Cellulose-NMMO-Lösung auch beidseitig d.h. sowohl auf die Außen- als auch Innenseite der Hülle 6 aufgebracht werden.

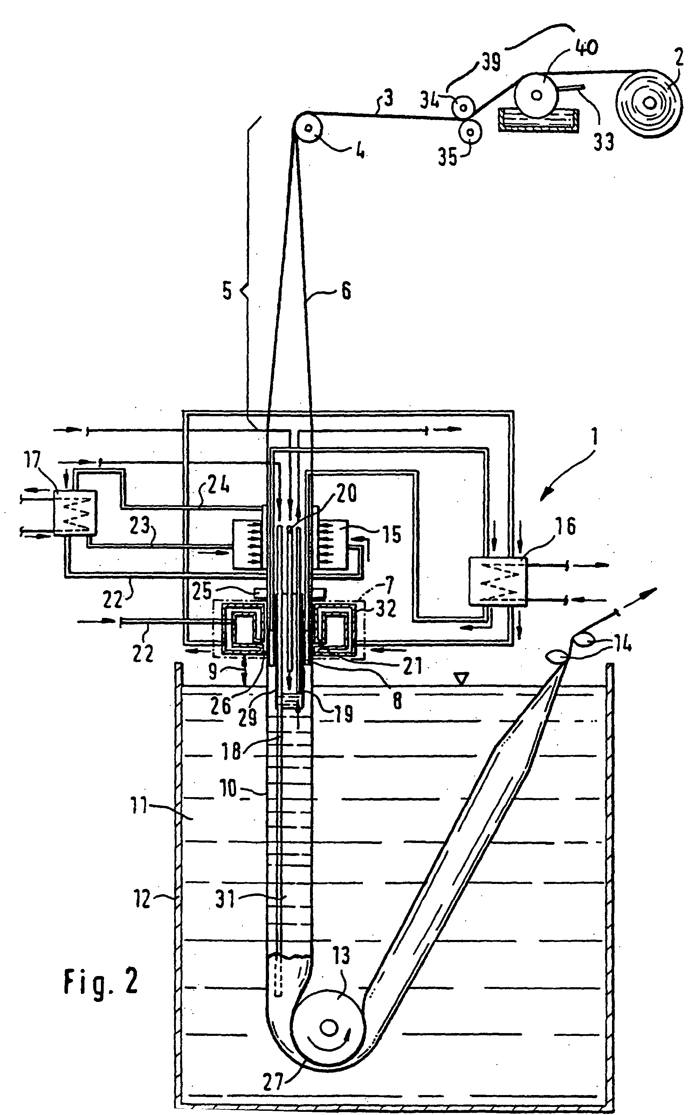

Als äußere Ringdüse fungiert dabei die Ringdüse 21, während die innere Ringdüse an die Stelle der Kaliberringscheibe 8 in den Figuren 1 und 2 tritt. Die innere Ringdüse ist, ähnlich wie die Kaliberringscheibe, beheizbar. Bei dieser Behandlungsvariante können der äußere und der innere Cellulose-NMMO-Lösungsfilm in räumlichem Abstand voneinander aufgebracht werden, d.h. zeitverzögert.

Das Spinnbad 11 besteht aus einer wäßrigen NMMO-Lösung mit 5 bis 50 Gew.-%igem, insbesondere 8 bis 20 Gew.-%igem NMMO-Anteil. Eine Vorwärmeeinrichtung 15 ist vor dem Düsenblock 7 angeordnet und über Heißluftleitungen 22, 23 und eine Abluftleitung 24 mit einer regelbaren Heizung 17 verbunden. Die aus der Ringdüse 21 extrudierte wäßrige Spinnlösung ist eine Cellulose-NMMO-Lösung mit 75 bis 90 Gew.-%, insbesondere 87,7 Gew.-% Morpholinanteil. Die Spinnlösung wird mittels einer nicht gezeigten Spinnpumpe einseitig in die Ringdüse 21 eingebracht und in dieser über eine nicht gezeigte Verteilerscheibe über den Umfang weitgehend gleichmäßig über den Düsenspalt verteilt. Die Ringdüse 21 besitzt einen Doppelmantel 32 zur Erwärmung der Ringdüse 21 auf die Temperatur der Morpholinlösung, wobei für die Erwärmung ein Heizmedium vorgesehen ist, das den Doppelmantel 32 durchströmt und in einem geregelten Heizkreislauf 16 erwärmt wird, der über Leitungen mit dem Doppelmantel 32 verbunden ist. Der aus dem Düsenblock 7 extrudierte Folienschlauch 10 durchläuft die Luftstrecke 9, in der er mittels Druckluft aufgeweitet und geringfügig querverstreckt wird. Der aufgeweitete Folienschlauch 10 hat keinen Kontakt mit der Außenseite eines Rohrs 29, das sich über die Unterseite des Düsenblocks 7 hinaus nach unten erstreckt. Die Luftstrecke beträgt 1 bis 1000 mm, insbesondere 200 bis 500 mm. Das Rohr 29 umschließt ein Zulauf- und ein Absaugrohr 18 bzw. 19 für eine Innenbadlösung 31, die den Folienschlauch 10 füllt. Diese Innenbadlösung 31 ist eine wäßrige NMMO-Lösung mit 5 bis 50 Gew.-%, insbesondere 8 bis 20 Gew.-% NMMO-Anteil. Das Zulauf- und das Absaugrohr 18 bzw. 19 ragen in den senkrecht nach unten in das Spinnbad 11 eintauchenden Folienschlauch 10 hinein. Zu Beginn des Einfüllens der Innenbadlösung 31 in den Folienschlauch 10 nimmt das Zulaufrohr 18 eine obere Position ein, wie dies in Fig. 1 gezeigt ist. Sobald der Folienschlauch mit der Innenbadlösung gefüllt ist, wird das Zulaufrohr 18 in eine Position in den Folienschlauch 10 eingeschoben, die sich knapp oberhalb einer Umlenkwalze 13 für den Folienschlauch 10 befindet, wie dies aus Fig. 2 zu entnehmen ist. Das Zulaufrohr 18 ist innerhalb des senkrecht eintauchenden Folienschlauchs 10 höhenverstellbar, ebenso das Absaugrohr 19.

Durch eine Leitung 20 für Stützluft wird Luft mit einem Überdruck von 0,1 bis 10 mbar in das Innere des Folienschlauchs 10 geleitet. Dieser Überdruck bewirkt eine geringe Aufweitung des aufgeblasenen Folienschlauchs in der Luftstrecke 9 unmittelbar nach seinem Austritt aus dem Düsenblock 7. Der in das Spinnbad 11 eintauchende Folienschlauch 10 wird nahe dem Boden der Spinnkufe 12 umgelenkt. Hierzu ist die Umlenkwalze 13, bei der es sich um eine angetriebene umlaufende Walze handelt, vorgesehen, um die der Folienschlauch 10 herumgeführt wird. Nach der Um lenkung wird der Folienschlauch innerhalb des Spinnbades 11 schräg nach oben aus dem Spinnbad herausgeführt. Der schräg nach oben verlaufende Folienschlauch 10 wird knapp unterhalb der Oberfläche des Spinnbades durch den Druck des Spinnbades zusammengequetscht und im flachgelegten Zustand aus dem Spinnbad 11 hinausgeführt. Abstreifer 14 zu beiden Seiten des zusammengelegten Folienschlauchs 10 streifen die überschüssige Spinnbadlösung beidseitig ab. Die Breite des flachgelegten Folienschlauches 10 wird möglichst konstant gehalten. Jede Abweichung der Breite des flachgelegten Folienschlauches 10 von dem gewünschten Sollwert führt zu einer Nachregelung der auf den Folienschlauch 10 ausgeübten Zugspannung, um den vorgegebenen Sollwert einzuhalten.

Fig. 2 unterscheidet sich von Fig. 1 nur darin, daß das Zulaufrohr 18 in Fig. 2 im Vergleich zu Fig. 1 soweit in den senkrecht eintauchenden Folienschlauch 10 eingeschoben ist, daß sich die Mündung des Zulaufrohrs knapp oberhalb der Umlenkwalze 13 befindet. Das Spinnbad 11 und die Innenbadlösung 31 sind, wie schon zuvor erwähnt wurde, wäßrige NMMO-Lösungen, die zu Beginn der Extrusion des Folienschlauchs 10 gleiche NMMO-Konzentrationen aufweisen. Mit fortschreitender Extrusion wird zunächst die NMMO-Konzentration der Innenbadlösung 31 ansteigen, da Morpholin während der Celluloseregenerierung die Einlage 3 durchdringt und in die Innenbadlösung 31 eintritt und sich dort anreichert. Da Morpholin eine höhere Dichte als Wasser besitzt, steigt die Konzentration bzw. Dichte der NMMO-Lösung in Richtung der Umlenkwalze 13 innerhalb des Folienschlauchs 10 an. Die Konzentration der NMMO-Lösung des Spinnbades 11 ändert sich praktisch nicht, da das von dem Folienschlauch an das Spinnbad 11 abgegebene Morpholin wegen des großen Volumenunterschieds zwischen Folienschlauch und Spinnbad nur vernachlässigbar geringfügig die NMMO-Konzentration des Spinnbades 11 anheben kann. Bei der Innenbadlösung 31 im Folienschlauch 10 käme es ohne Regelung der NMMO-Konzentration der Innenbadlösung 31 zu unterschiedlichen Koagulationsbedingungen sowie zu einer Durchmesserveränderung des Folienschlauchs 10. Durch die ständige Zufuhr und das Absaugen der Innenbadlösung 31 über das Zufuhr- und das Absaugrohr 18 bzw. 19 kommt es zu einer stetigen Erneuerung der Innenbadlösung 31, d.h. die an Morpholin angereicherte Innenbadlösung 31 nahe der Umlenkwalze 13 wird verdünnt, so daß die NMMO-Konzentration der Innenbadlösung 31 nahe der Umlenkwalze 13 kleiner oder höchstens gleich groß wie die NMMO-Konzentration des Spinnbades 11 ist. Der auf den Folienschlauch 10 ausgeübte Zug zusammen mit dem Druck des Spinnbades 11 reichen aus, um den Folienschlauch 10 entlang einer Kontaktstrecke 27 an die Umlenkwalze 13 so anzudrücken, daß er mehr oder weniger flachgelegt ist, wie dies aus den Fig. 1 und 2 ersichtlich ist. Dadurch stellen sich in dem Folienschlauch über die gesamte Länge von knapp unterhalb der Oberfläche des Spinnbades 11 bis nahe zu der Umlenkwalze 13 gleichbleibende Druckverhältnisse ein, die dafür sorgen, daß das Kaliber bzw. der Durchmesser des Folienschlauchs 10 konstant ist und keine Schwankungen bzw. Einschnürungen aufweist. Die Dichte der Innenbadlösung 31 ist somit abhängig von dem Durchsatz an Innenbadlösung bzw. Morpholin-Lösung, der Innenbadmenge und der Eintauchtiefe des Zulaufrohres 18 bzw. der Einspeisestelle frischer Morpholin-Lösung in die Innenbadlösung 31. Die Position bzw. die Stelle, an der die Innenbadlösung 31 in den Folienschlauch 10 einströmt, beeinflußt im wesentlichen die Kaliberkonstanz, die Innenbadhöhe im aufsteigenden Folienschlauch 10 nach der Umlenkwalze 13 und die Stelle zum Entfernen der Innenbadlösung 31 aus dem Inneren des Folienschlauchs.

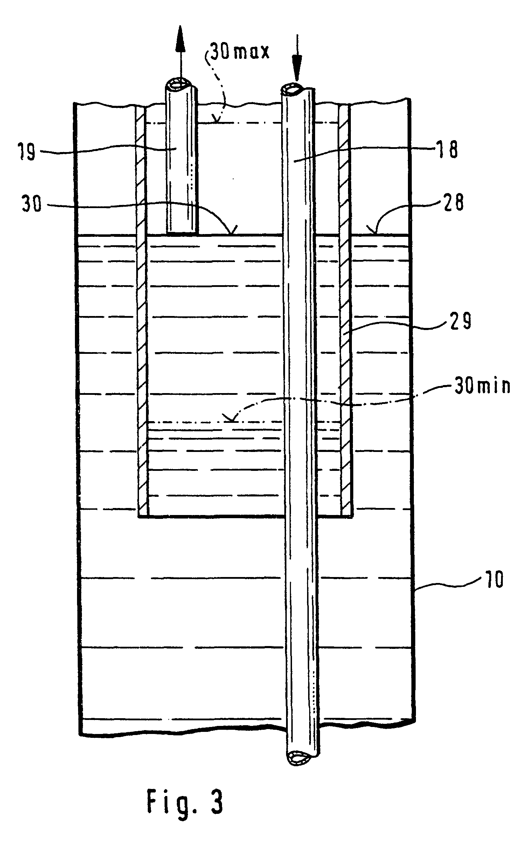

Fig. 3 zeigt den Ausschnitt gemäß der Stelle A in Fig. 1 in vergrößertem Maßstab. Das Rohr 29 ist etwa 50 bis 100 mm in die Innenbadlösung im Inneren des Folienschlauchs eingetaucht. Das Absaugrohr 19 befindet sich in einer Position, in der sich ein Rohrpegel 30 innerhalb des Rohrs 29 einstellt, der bis zu 20 mm höher oder bis zu 45 mm tiefer als ein Innenbadpegel 28 der Innenbadlösung des Folienschlauchs 10 ist. Mit anderen Worten bedeutet dies, daß das Absaugrohr 19 eine Position einnimmt, in der die Innnenbadlösung so abgesaugt wird, daß sich der Innenbadpegel 30 in dem Abstand von bis zu 20 mm höher oder bis zu 45 mm tiefer als der Rohrpegel 28 einstellt. Der höchste und der tiefste Rohrpegel 30 sind durch strichpunktierte Linien 30ₘₐₓ und 30ₘᵢₙ in Fig. 3 angedeutet. Die Absaugung beginnt üblicherweise unterhalb des Pegels des Spinnbades 11, so daß die darüber befindliche Luftstrecke 9 und die dort herrschenden Druckbedingungen keinen Einfluß auf die Innenbadlösung haben und somit auch keine Kaliberschwankungen des Folienschlauchs 10 bewirken können. Erfolgt die Absaugung oberhalb des Pegels des Spinnbades 11 ist der Einfluß der Druckbedingungen in der Luftstrecke 9 auf den Folienschlauch 10 vernachlässigbar, da dieser durch die Einlage so weit formstabil ist, daß er kaum noch Kaliberschwankungen unterliegt.

Durch die Einstellung der Eintauchtiefe des Zufuhrrohrs 18 und die stetige Erneuerung der Innenbadlösung wird die Dichte der Innenbadlösung 31 auf einem gleichbleibenden Wert gehalten, der zu der Einschnürung des Folienschlauchs 10 entlang der Kontaktstrecke 27 der Umlenkwalze 13 führt und den Pegel der Innenbadlösung 31 im aufsteigenden Folienschlauch 10 bei beliebig langer Laufzeit konstant gegenüber der Oberfläche des Spinnbads 11 einstellt, so daß es nicht mehr zu unruhigem Lauf und Kaliberschwankungen des Folienschlauchs kommt. Die stetige Erneuerung bzw. die Mindestzufuhr an Innenbadlösung 31 ist für jede Extrusions-bzw. Abzugsgeschwindigkeit des Folienschlauchs eigens zu ermitteln.

Der aus dem Spinnbad 11 austretende Folienschlauch 10 durchläuft nachfolgend nicht gezeigte Fäll- und Waschkufen, und kann beispielsweise noch mit Weichmachern behandelt und anschließend getrocknet werden, bevor er aufgewickelt und weiterverarbeitet wird.

In Abwandlung des Verfahrens wird der Spinnbadpegel des Spinnbades 11 innerhalb und außerhalb des Folienschlauchs bis zur Oberkante der Umlenkwalze 13 abgesenkt und der Folienschlauch 10 innen und außen über Ringdüsen, wie dies beispielsweise in der EP-A 0 006 601 beschrieben ist, mit Spinnbad besprüht.

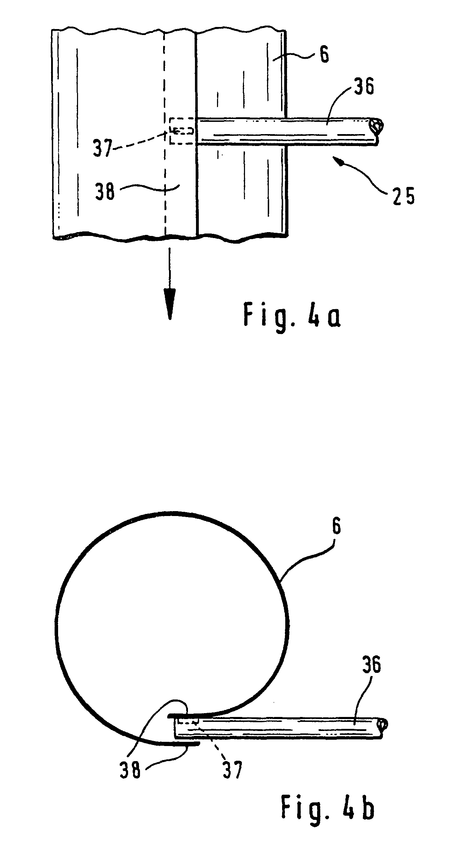

In den Figuren 4a und 4b sind eine Seiten- und eine Draufsicht der Klebeeinrichtung 25 schematisch dargestellt. Die Klebeeinrichtung 25 umfaßt einen hohlen feststehenden Finger 36 mit einem Schlitz 37, aus dem der Kleber, der im Inneren des Fingers 36 fließt, auf die Längsnaht 38 der schlauchförmigen Hülle 6 aufgebracht wird. Die Hülle 6 bewegt sich dabei senkrecht in Pfeilrichtung an dem Finger 36 vorbei.

Der Folienschlauch 10 kann auch alternativ oder zusätzlich zu der Stützluft über ein Rohr, einen Ring oder einen Breithalter in Flachform faltenfrei aufgespannt werden.

Neben der anhand der Figuren 1 bis 4b beschriebenen Behandlung des Folienschlauches 10 in dem Spinnbad 11 mit komplettem Eintauchen des Folienschlauches in das Spinnbad, wobei das Schlauchinnere zum Druckausgleich mit einem Innenbad gefüllt ist und der Innenbadpegel 28 abweichend von dem Rohrpegel 30 in dem Rohr 29 bzw. von dem Außenpegel des Spinnbades 11 regulierbar ist, kann auch, im Falle der zuvor beschriebenen doppelseitigen Beschichtung mit Cellulose-NMMO-Lösung, ein NMMO-Lösungsfilm sowohl auf die Außen- als auch die Innenseite des Folienschlauches 10 mittels einer äußeren und einer inneren Ringdüse aufgebracht werden.

## Patentansprüche

1. Verfahren zur Herstellung eines mit einer Einlage verstärkten Folienschlauches auf Cellulosebasis, durch Extrudieren einer Cellulose-Lösung auf die Einlage, wobei die Einlage von einer Rolle abgezogen, mit Emulgatoren, Netz- und/ oder Verankerungsmitteln behandelt wird und zu einer schlauchförmigen Hülle mit überlappender Längsnaht geformt wird, die vor einem Düsenblock verklebt wird, durch den die Hülle hindurchgeführt und in welchem die Cellulose-Lösung auf die Hülle aufgebracht wird und diese durchdringt, um einen einlagenverstärkten Folienschlauch zu erhalten, die Cellulose-Lösung eine wäßrige Cellulose-N-methyl-morpholin N-oxid-Lösung ist und die schlauchförmige Hülle eine vor dem Düsenblock befindliche Heizstrecke durchläuft, in der sie mittels Heißluft auf die Temperatur der extrudierten Cellulose-N-methyl-morpholin N-oxid-Lösung vorgewärmt wird, wobei das Innere des Folienschlauches mit einer Lösung gefüllt wird und der Folienschlauch aus dem Düsenblock aus- und in ein Spinnbad eintritt, in diesem umgelenkt und herausgeführt wird.

2. Verfahren nach Anspruch 1, **dadurch gekennzeichnet, daß** in das Innere des Folienschlauches nach dem Verlassen des Düsenblocks druckgeregelte Stützluft eingeblasen wird.

3. Verfahren nach Anspruch 1, **dadurch gekennzeichnet, daß** der Folienschlauch über eine beheizte Kaliberringscheibe geführt wird, die von einem Heizmedium im geregelten Kreislauf durchströmt wird.

4. Verfahren nach Anspruch 1, **dadurch gekennzeichnet, daß** die wäßrige N-methyl-morpholin N-oxid-Lösung durch den Düsenblock hindurch in das Innere des Folienschlauches eingefüllt und auch abgesaugt wird, wobei der Zulauf und die Absaugung voneinander räumlich getrennt vorgenommen werden.

5. Verfahren nach Anspruch 4, **dadurch gekennzeichnet, daß** der Zulauf der wäßrigen N-methyl-morpholin N-oxid-Lösung im Folienschlauch höhenverstellbar geregelt wird und daß die Absaugung in einer Weise erfolgt, daß der Pegel im Folienschlauch bis zu 20 mm höher und bis zu 45 mm niedriger gegenüber dem Pegel im Spinnbad variierbar ist.

6. Verfahren nach Anspruch 1, **dadurch gekennzeichnet, dass** der Folienschlauch nach dem Austritt aus dem Düsenblock eine Luftstrecke bis zum Eintritt in das Spinnbad durchläuft und daß in der Luftstrecke eine äußere Temperaturbehandlung stattfindet, welche die Verfestigungsgeschwindigkeit der Cellulose-N-methyl-morpholin N-oxid-Lösung des Folienschlauches regelt.

7. Verfahren nach Anspruch 1, **dadurch gekennzeichnet, daß** der Folienschlauch senkrecht in das Spinnbad eintaucht und unter Aufrechterhaltung einer konstanten Zugspannung durch eine nahe zum Kufenboden des Spinnbades mitlaufende, angetriebene Umlenkwalze umgelenkt und schräg nach oben aus dem Spinnbad herausgeführt wird.

8. Verfahren nach Anspruch 1, **dadurch gekennzeichnet, daß** der Spinnbadpegel innerhalb und außerhalb des Folienschlauchs bis auf die Oberkante einer Umlenkwalze abgesenkt wird und daß der Folienschlauch innen und außen mit Spinnbad besprüht wird.

9. Verfahren nach Anspruch 1, **dadurch gekennzeichnet, daß** die Längsnaht der schlauchförmigen Hülle mit reinem N-methyl-morpholin N-oxid oder einer Cellulose-N-methyl-morpholin N-oxid-Lösung bei einer Temperatur von 15 bis 110°C, insbesondere bei der Temperatur der im Düsenblock extrudierten Cellulose-N-methyl-morpholin N-oxid-Lösung, geklebt wird.

10. Verfahren nach Anspruch 1, **dadurch gekennzeichnet, daß** der Cellulosegehalt der extrudierten Cellulose-N-methyl-morpholin N-oxid-Lösung 1 bis 15 Gew.-%, insbesondere 3 bis 7 Gew.-%, bezogen auf die Gesamtlösung beträgt und daß der durchschnittliche Polymerisationsgrad im Bereich von 250 bis 800, insbesondere von 300 bis 500 liegt.

11. Verfahren nach Anspruch 1, **dadurch gekennzeichnet, daß** die wäßrige N-methyl-morpholin N-oxid-Lösung des Spinnbades eine N-methyl-morpholin N-oxid-Konzentration von 5 - 50 Gew.-%, insbesondere von 8 bis 20 Gew.-% aufweist und dass das Spinnbad auf 0 bis 50 °C, insbesondere 2 bis 20 °C temperiert wird.

12. Verfahren nach Anspruch 4, **dadurch gekennzeichnet, daß** die Konzentrationen der N-methyl-morpholin N-oxid-Lösung des Spinnbades und der wäßrigen N-methyl-morpholin N-oxid-Lösung im Folienschlauch zu Beginn der Extrusion des Folienschlauches gleich groß eingestellt werden.

13. Verfahren nach Anspruch 2, **dadurch gekennzeichnet, daß** der Überdruck der Stützluft im Folienschlauch im Bereich zwischen dem Düsenblock und dem Spinnbad 0,1 bis 10 mbar beträgt.

14. Verfahren zur Herstellung eines mit einer Einlage verstärkten Folienschlauches nach Anspruch 1, **dadurch gekennzeichnet, dass** die Einlage (3) aus der Gruppe Papier, Vlies, Faservlies, Faserpapier ausgewählt wird, wobei die Fasern insbesondere Hanffasem sind.

15. Verfahren zur Herstellung eines mit einer Einlage verstärkten Folienschlauches nach Anspruch 1, **dadurch gekennzeichnet, dass** der Folienschlauch (10) senkrecht zu dem Boden des Spinnbades (11) ausgerichtet wird und mit konstantem Kaliber an der Umlenkwalze (13) anliegt.

16. Vorrichtung zur Herstellung eines mit einer Einlage (3) verstärkten Folienschlauches (10), mit einer Vorratsrolle (2) für die Einlage, einer Formstrecke (5), in der die Einlage zu einer schlauchförmigen Hülle (6) mit überlappender Längsnaht (38) geformt wird, einem Düsenblock (7) mit einer Ringdüse (21), aus deren Düsenspalt die Lösung auf die schlauchförmige Hülle zur Ausformung des Folienschlauchs (10) extrudierbar ist, mit einer temperierbaren Luftstrecke (9) zwischen dem Austritt aus dem Düsenblock und einem Spinnbad (11) in einer Spinnkufe (12) und einem Zulauf- und einem Absaugrohr (18 bzw. 19) im Inneren des Folienschlauches, und einer Umlenkwalze (13) fur den Folienschlauch (10) nahe dem Boden der Spinnkufe (12), **dadurch gekennzeichnet, daß** eine Umlenkrolle (4) mit einer Einrichtung (39) zum Auftragen von Additiven und eine dem Düsenblock vorgeschaltete Klebeeinrichtung (25) zum Verkleben der Längsnaht der schlauchförmigen Hülle vorhanden sind, daß eine Vorwärmeeinrichtung (15) für die schlauchförmige Hülle vor dem Düsenblock angeordnet ist, daß die Vorwärmeeinrichtung über Heißluftleitungen (22,23) und eine Abluftleitung (24) mit einer Heizung (17) verbunden ist, aus der im Kreislauf erwärmte Luft in die Vorwärmeeinrichtung strömt und aus welcher abgekühlte Luft in die Heizung (17) Zurückströmen kann.

17. Vorrichtung zur Herstellung eines mit einer Einlage verstärken Folienschlauches nach Anspruch 16, **dadurch gekennzeichnet, dass** zwischen der Vorratsrolle (2) und der Umlenkrolle (4) eine Auftragseinrichtung (39) angebracht ist, mit der Additive wie Emulgatoren, Netz- und/oder Verankerungsmittel auf die Einlage (3) aufbringbar sind.

18. Vorrichtung zur Herstellung eines mit einer Einlage verstärken Folienschlauches nach Anspruch 16, **dadurch gekennzeichnet, dass** der Düsenblock (7) die Ringdüse (21) enthält, die einen Doppelmantel (32) aufweist, der mit einem Heizkreislauf (16) verbunden ist und dass das Zulauf- und das Ansaugrohr (18;19) für die wässrige N-methyl-morpholin-N-oxid-Lösung und eine Leitung (20) für Stützluft des Folienschlauchs (10) zentral durch eine Kaliberringscheibe (8) hindurchgeführt sind, die konzentrisch zu der Ringdüse (21) im Folienschlauchinneren angeordnet ist und mit dieser einen Ringspalt (26) für den Folienschlauch (10) bildet.

19. Vorrichtung zur Herstellung eines mit einer Einlage verstärken Folienschlauches nach Anspruch 18, **dadurch gekennzeichnet, dass** die Kaliberringscheibe (8) mit einem Heizkreislauf (16) zwecks Beheizung verbunden ist.

20. Vorrichtung zur Herstellung eines mit einer Einlage verstärken Folienschlauches nach Anspruch 18, **dadurch gekennzeichnet, dass** das Zulaufrohr (18) und das Absaugrohr (19) innerhalb des Folienschlauches (10) einzeln höhenverstellbar sind.

21. Vorrichtung zur Herstellung eines mit einer Einlage verstärken Folienschlauches nach Anspruch 20, **dadurch gekennzeichnet, dass** das Zulaufrohr (18) zum Einfüllbeginn der wässrigen N-methyl-morpholin-N-oxid-Lösung in den Folienschlauch (10) in einer oberen Position angeordnet ist und mit Beginn des kontinuierlichen Betriebes eine Position knapp oberhalb der Umlenkrolle (13) einnimmt.

22. Vorrichtung zur Herstellung eines mit einer Einlage verstärkten Folienschlauches nach Anspruch 18, **dadurch gekennzeichnet, dass** der Doppelmantel (32) der Ringdüse (21) über Leitungen mit dem geregelten Heizkreislauf (16) verbunden ist.

23. Vorrichtung zur Herstellung eines mit einer Einlage verstärkten Folienschlauches nach Anspruch 16, **dadurch gekennzeichnet, dass** zwischen dem Austritt aus dem Düsenblock (7) und dem Spinnbad (11) in der Spinnkufe (12) eine temperierbare Luftstrecke (9) mit einer Länge von 1 bis 1000 mm, insbesondere 200 bis 500 mm vorhanden ist.

24. Vorrichtung zur Herstellung eines mit einer Einlage verstärkten Folienschlauches nach Anspruch 16, **dadurch gekennzeichnet, dass** die Umlenkwalze (13) eine Kontaktstrecke (27) aufweist, entlang welcher der um die Umlenkwalze (13) herumgeführte Folienschlauch (10) flachgelegt ist.

## Claims

1. Method for the production of a film tube on a cellulose basis, which is strengthened by an insert, by extruding a cellulose solution onto the insert, which is drawn from a roll and is processed with emulsifiers, wetting agents and/or sticking agents and is formed to a tube with overlapping longitudinal seam, which is cemented ahead of a nozzle block, through said nozzle block the tube is carried through and in which the cellulose solution is applied to the tube and penetrates it in order to obtain an insert-reinforced film tube, the cellulose solution is an aqueous cellulose-N-methyl-morpholine-N-oxide solution and the tube passes through a heating section situated ahead of the nozzle, in which the tube is reheated with hot air to the temperature of the extruded cellulose-N-methyl-morpholine-N-oxide solution, whereby the interior of the film tube is filled with a solution, and the film tube exits from the nozzle block and enters into a spin bath, is turned about in the latter and carried out.

2. Method according to claim 1, **characterized in that** controlled-pressure supporting air is blown into the interior of the film tube after leaving the nozzle block.

3. Method according to claim 1, **characterized in that** the film tube is carried through a heated ring gauge through which a heating medium flows in controlled circulation.

4. Method according to claim 1, **characterized in that** the aqueous cellulose-N-methyl-morpholine-N-oxide solution is delivered through the nozzle block into the interior ofthe film tube and also removed therefrom, the delivery and the removal being performed spatially separately from one another.

5. Method according to claim 4, **characterized in that** the level of the delivery of the aqueous cellulose-N-methyl-morpholine-N-oxide solution is vertically adjustable in the film tube and that its removal is performed such that the level in the film tube can be varied up to 20 mm higher and up to 45 mm lower than the level in the spin bath.

6. Method according to claim 1, **characterized in that** the film tube, after exiting from the nozzle block, passes through an open air section until it enters the spin bath, and that an external temperature treatment takes place in the open air section, which controls the solidification rate of the film tube's cellulose-N-methyl-morpholine-N-oxide solution.

7. Method according to claim 1, **characterized in that** the film tube plunges vertically into the spin bath and with maintenance of a constant tension is turned about by a driven deflector roll running with it near the bottom of the spin bath tub and is carried out upwardly at an angle out of the spin bath.

8. Method according to claim 1, **characterized in that** the spin bath level inside and outside of the film tube is lowered as far as the upper edge of a deflector roll and that the film tube is sprayed inside and outside with spin bath.

9. Method according to claim 1, **characterized in that** the longitudinal seam of the tubular envelope is cemented with straight N-methyl-morpholine-N-oxide or a cellulose-N-methyl-morpholine-N-oxide solution at a temperature of 15 to 110 °C, especially at the temperature of the cellulose-N-methyl-morpholine-N-oxide solution extruded in the nozzle block.

10. Method according to claim 1, **characterized in that** the cellulose content of the extruded cellulose-N-methyl-morpholine-N-oxide solution amounts to 1 to 15 wt.%, especially 3 to 7 wt.-% with respect to the total solution, and that the average degree of polymerization ranges from 250 to 800, especially from 300 to 500.

11. Method according to claim 1, **characterized in that** the aqueous N-methyl-morpholine-N-oxide solution of the spin bath has a N-methyl-morpholine-N-oxide concentration of 5 to 50 wt.-%, especially of 8 to 20 wt.-%, and that the spin bath is adjusted to 0 to 50 °C, especially 2 to 20 °C.

12. Method according to claim 4, **characterized in that** the concentrations of the N-methyl-morpholine-N-oxide solution of the spin bath and of the aqueous N-methyl-morpholine-N-oxide solution in the film tube are equally adjusted at the begin of the extrusion of the film tube.

13. Method according to claim 2, **characterized in that** the excess pressure of the supporting air within the film tube in the section between the nozzle block and the spin bath amounts to 0,1 to 10 mbar.

14. Method for the production of a film tube which is strengthened by an insert according to claim 1, **characterized in that** the insert (3) is selected from the group paper, nonwoven, fiber fleece and fiber paper, the fibers being especially long hemp fibers.

15. Method for the production of a film tube which is strengthened by an insert according to claim 1, **characterized in that** the film tube (10) is vertically directed to the bottom of the spin bath (11) and abuts the deflector roll (13) with constant gauge.

16. Apparatus for the production of a film tube (10) strengthened by an insert (3), with a supply roll (2) for the insert, a forming section (5) in which the insert is formed into a tube (6) with overlapping longitudinal seam (38), a nozzle block (7) with a ring nozzle (21) from the nozzle gap of which the solution is extrudable at the tube for the formation of the film tube (10), with a heatable air section (9) between the exit of the nozzle block and a spin bath (11) in a spin tub (12) and a delivery tube (18) and a removal tube (19) in the interior of the film tube and a deflector roll (13) for the film tube (10) near the bottom of the spin tube (12) **characterized in that** a deflector roll (4) with a device (39) for the application of additives and a cementing-device (25) disposed ahead of the nozzle block for cementing the longitudinal seam of the tube are provided, that a preheating system (15) for the tube is disposed ahead of the nozzle block, that the preheating system is connected by hot air ducts (22, 23) and an exhaust duct (24) to a heater (17) from which circulating heated air flows into the preheating system and from which cooled air flows back into the heater (17).

17. Apparatus for the production of a film tube strengthened by an insert, according to claim 16, **characterized in that** between the supply roll (2) and the deflector roll (4) an applicator device (39) is provided with which additives such as emulsifiers, wetting agents and/or anchoring agents can be applied to the insert.

18. Apparatus for the production of a film tube strengthened by an insert, according to claim 16, **characterized in that** the nozzle block (7) contains the ring nozzle (21) which has a double jacket (32) connected to a heating circuit (16) and that the delivery tube (18) and the removal tube (19) for the aqueous N-methyl-morpholine-N-oxide solution and a duct (20) for air supporting the film tube (10) are brought centrally through a gauge ring (8) which is disposed in the film tube interior concentrically with the ring nozzle (21) and forms with the latter a ring gap (26) through which the film tube (10) runs.

19. Apparatus for the production of a film tube strengthened by an insert, according to claim 18, **characterized in that** the gauge ring (8) is connected with the heating circuit (16) for heating purposes.

20. Apparatus for the production of a film tube strengthened by an insert, according to claim 18, **characterized in that** the delivery tube (18) and the removal tube (19) are individually height-adjustable within the film tube (10).

21. Apparatus for the production of a film tube strengthened by an insert, according to claim 20, **characterized in that** when the pouring of the aqueous N-methyl-morpholine-N-oxide solution into the film tube (10) begins the delivery tube (18) is in an upper position and, when continuous operation begins, it assumes a position just above the deflector roll (13).

22. Apparatus for the production of a film tube strengthened by an insert, according to claim 18, **characterized in that** double jacket (32) of the ring nozzle (21) is connected via ducts to the controllable heating circuit (16).

23. Apparatus for the production of a film tube strengthened by an insert, according to claim 16, **characterized in that** between the exit from the nozzle block (7) and the spin bath (11) in a spin tub (12) a controlled-temperature open air section (9) with a length of 1 to 1000 mm, especially 200 to 500 mm is present.

24. Apparatus for the production of a film tube strengthened by an insert, according to claim 16, **characterized in that** the deflector roll (13) has a contact path (27) on which the film tube (10) which is wrapped around the deflector roll, lies flat.

## Revendications

1. Procédé de fabrication d'un tuyau à membrane à base de cellulose renforcé par une garniture intérieure, par extrusion d'une solution de cellulose sur la garniture intérieure, la garniture intérieure étant dévidée d'un rouleau, traitée avec des émulsifiants, des agents de réticulation et/ou des moyens d'ancrage et conformée en forme de gaine tubulaire avec un joint longitudinal à recouvrement, qui est assemblé par collage en amont d'un bloc filière à travers lequel est guidée la gaine et dans lequel la solution de cellulose est déposée sur la gaine et pénètre à travers celle-ci, en vue d'obtenir un tuyau à membrane renforcé par une garniture intérieure, la solution de cellulose étant une solution aqueuse de N-oxyde de cellulose-N-méthyl-morpholine, et la gaine tubulaire défilant dans une voie de chauffage située en amont du bloc filière, dans laquelle elle est préchauffée avec de l'air chaud pour atteindre la température de la solution de N-oxyde de cellulose-N-méthyl-morpholine extrudée, dans lequel procédé l'intérieur du tuyau à membrane est rempli d'une solution et le tuyau à membrane sort du bloc filière et entre dans un bain de filage, est dévié dans celui-ci et guidé hors de celui-ci.

2. Procédé selon la revendication 1, **caractérisé en ce que** de l'air de support sous pression régulée est insufflé à l'intérieur du tuyau à membrane à la sortie du bloc filière.

3. Procédé selon la revendication 1, **caractérisé en ce que** le tuyau à membrane est guidé sur un disque annulaire de calibrage chauffé, à travers lequel passe un milieu de chauffage en circuit régulé.

4. Procédé selon la revendication 1, **caractérisé en ce que** la solution aqueuse de N-oxyde de cellulose-N-méthyl-morpholine est injectée à travers le bloc filière vers l'intérieur du tuyau à membrane et est également aspirée, l'admission et l'aspiration étant des processus séparés physiquement l'un de l'autre.

5. Procédé selon la revendication 4, **caractérisé en ce que** l'admission de la solution aqueuse de N-oxyde de cellulose-N-méthyl-morpholine dans le tuyau à membrane est réglable en hauteur et **en ce que** l'aspiration est effectuée de telle sorte que l'on peut faire varier le niveau dans le tuyau à membrane jusqu'à 20 mm au-dessus et jusqu'à 45 mm au-dessous du niveau dans le bain de filage.

6. Procédé selon la revendication 1, **caractérisé en ce que** le tuyau à membrane, après avoir quitté le bloc filière, passe à travers une voie d'air jusqu'à son entrée dans le bain de filage et **en ce que** dans la voie d'air, il subit un traitement thermique externe qui régule la vitesse de solidification de la solution de N-oxyde de cellulose-N-méthyl-morpholine.

7. Procédé selon la revendication 1, **caractérisé en ce que** le tuyau à membrane entre verticalement dans le bain de filage et, tout en restant soumis à une contrainte de traction constante, est dévié par une poulie de renvoi actionnée en rotation à proximité du fond de la cuve contenant le bain de filage, et est guidé en oblique vers le haut pour sortir du bain de filage.

8. Procédé selon la revendication 1, **caractérisé en ce que** le niveau du bain de filage à l'intérieur et à l'extérieur du tuyau à membrane est abaissé jusqu'au bord supérieur d'une poulie de renvoi et **en ce que** le tuyau à membrane est aspergé à l'intérieur et à l'extérieur par le bain de filage.

9. Procédé selon la revendication 1, **caractérisé en ce que** le joint longitudinal de la gaine tubulaire est assemblé par collage avec de la N-oxyde de N-méthyl-morpholine pure ou une solution de N-oxyde de cellulose-N-méthyl-morpholine à une température de 15 à 110°C, en particulier à la température de la solution de N-oxyde de cellulose-N-méthyl-morpholine extrudée dans le bloc filière.

10. Procédé selon la revendication 1, **caractérisé en ce que** la teneur en cellulose dans la solution de N-oxyde de cellulose-N-méthyl-morpholine extrudée est de l'ordre de 1 à 15 % en poids, en particulier 3 à 7 % en poids par rapport la solution globale et **en ce que** le degré de polymérisation moyen se situe dans le domaine de 250 à 800, en particulier de 300 à 500.

11. Procédé selon la revendication 1, **caractérisé en ce que** la solution aqueuse de N-oxyde de N-méthyl-morpholine du bain de filage présente une concentration en N-oxyde de N-méthyl-morpholine de 5 à 50 % en poids, en particulier de 8 à 20 % en poids et **en ce que** le bain de filage est tempéré à une température de 0 à 50°C, en particulier de 2 à 20°C.

12. Procédé selon la revendication 4, **caractérisé en ce que** les concentrations en solution de N-oxyde de N-méthyl-morpholine du bain de filage et en solution aqueuse de N-oxyde de N-méthyl-morpholine dans le tuyau à membrane au début de l'extrusion du tuyau à membrane sont réglées à des valeurs identiques.

13. Procédé selon la revendication 2, **caractérisé en ce que** la surpression de l'air de support dans le tuyau à membrane, dans la zone entre le bloc filière et le bain de filage, est de l'ordre de 0,1 à 10 mbar.

14. Procédé de fabrication d'un tuyau à membrane renforcé par une garniture intérieure selon la revendication 1, **caractérisé en ce que** la garniture intérieure (3) est choisie dans le groupe du papier, des non-tissés, des non-tissés à fibres, des papiers à fibres, les fibres étant en particulier des fibres de chanvre.

15. Procédé de fabrication d'un tuyau à membrane renforcé par une garniture intérieure selon la revendication 1, **caractérisé en ce que** le tuyau à membrane (10) est orienté perpendiculairement au fond du bain de filage (11) et est en appui avec un calibre constant contre la poulie de renvoi (13).

16. Dispositif de fabrication d'un tuyau à membrane (10) renforcé par une garniture intérieure (3), comprenant un rouleau de stockage (2) pour la garniture intérieure, une ligne de formage (5), dans laquelle la garniture intérieure est conformée en forme de gaine (6) tubulaire avec un joint longitudinal (38) à recouvrement, un bloc filière (7) avec une buse annulaire (21), à travers la fente de laquelle la solution est extrudée sur la gaine tubulaire en vue de former le tuyau à membrane (10), comprenant une voie d'air (9) tempérée entre la sortie du bloc filière (7) et un bain de filage (11) dans une cuve de filage (12) et un tube d'admission et un tube d'aspiration (18 et 19) à l'intérieur du tuyau à membrane, et une poulie de renvoi (13) pour le tuyau à membrane (10) à proximité du fond de la cuve de filage (12), **caractérisé en ce qu'**il est prévu une poulie de renvoi (4), avec un dispositif (39) destiné à déposer des additifs, et un dispositif de collage (25), en amont du bloc filière (7) et destiné à coller le joint longitudinal de la gaine tubulaire, **en ce qu'**un dispositif de préchauffage (15) de la gaine tubulaire est agencé en amont du bloc filière (7), **en ce que** le dispositif de préchauffage (15) est relié par l'intermédiaire de conduites d'air chaud (22, 23) et d'une conduite d'évacuation d'air (24) avec un système de chauffage (17) hors duquel l'air chauffé en circuit afflue dans le dispositif de préchauffage (15) et l'air refroidi sortant de celui-ci peut retourner dans le système de chauffage (17).

17. Dispositif de fabrication d'un tuyau à membrane renforcé par une garniture intérieure selon la revendication 16, **caractérisé en ce que**, entre le rouleau de stockage (2) et la poulie de renvoi (4), est agencé un dispositif d'application (39) par lequel des additifs, tels que des émulsifiants, des agents de réticulation et/ou des agents d'ancrage, peuvent être déposés sur la garniture intérieure (3).

18. Dispositif de fabrication d'un tuyau à membrane renforcé par une garniture intérieure selon la revendication 16, **caractérisé en ce que** le bloc filière (7) comporte la buse annulaire (21) qui possède une double enveloppe (32), qui est reliée à un circuit de chauffage (16) et **en ce que** le tube d'admission et le tube d'aspiration (18 ; 19) pour la solution aqueuse de N-oxyde de N-méthyl-morpholine et une conduite (20) pour l'air de support du tuyau à membrane (10) passent à travers le centre d'un disque annulaire de calibrage (8), qui est agencé concentriquement à la buse annulaire (21) à l'intérieur du tuyau à membrane et forme avec celle-ci une fente annulaire (26) pour le tuyau à membrane (10).

19. Dispositif de fabrication d'un tuyau à membrane renforcé par une garniture intérieure selon la revendication 18, **caractérisé en ce que** le disque annulaire de calibrage (8), en vue d'être chauffé, est relié à un circuit de chauffage (16).

20. Dispositif de fabrication d'un tuyau à membrane renforcé par une garniture intérieure selon la revendication 18, **caractérisé en ce que** le tube d'admission (18) et le tube d'aspiration (19) sont réglables en hauteur séparément à l'intérieur du tuyau à membrane (10).

21. Dispositif de fabrication d'un tuyau à membrane renforcé par une garniture intérieure selon la revendication 20, **caractérisé en ce que**, au début du remplissage de la solution aqueuse de N-oxyde de N-méthyl-morpholine dans le tuyau à membrane (10), le tube d'admission (18) est agencé dans une position supérieure et, au début d'un fonctionnement continu, est amené dans une position juste au-dessus de la poulie de renvoi (13).

22. Dispositif de fabrication d'un tuyau à membrane renforcé par une garniture intérieure selon la revendication 18, **caractérisé en ce que** la double enveloppe (32) de la buse annulaire (21) communique par l'intermédiaire de conduites avec le circuit de chauffage (16) régulé.

23. Dispositif de fabrication d'un tuyau à membrane renforcé par une garniture intérieure selon la revendication 16, **caractérisé en ce que**, entre la sortie du bloc filière (7) et le bain de filage (11) dans la cuve de filage (12), il est prévu une voie d'air (9) qui peut être tempérée et qui possède une longueur de 1 à 1 000 mm, en particulier de 200 à 500 mm.

24. Dispositif de fabrication d'un tuyau à membrane renforcé par une garniture intérieure selon la revendication 16, **caractérisé en ce que** la poulie de renvoi (13) comporte une voie de contact (27) le long de laquelle le tuyau à membrane (10), guidé autour de la poulie de renvoi (13), est posé à plat.
